# EUROPÄISCHE PATENTSCHRIFT

(11) **EP 0 892 727 B1**
(45) Veröffentlichungstag und Bekanntmachung des Hinweises auf die Patenterteilung: **27.02.2002**
(21) Anmeldenummer: 97922826.9
(22) Anmeldetag: 08.04.1997
(51) Int. Cl.: B60L 5/19

(54) **SCHIENENFAHRZEUG**
RAILWAY VEHICLE
VEHICULE SUR RAILS

(30) Priorität: 12.04.1996 DE 19614554; 05.08.1996 DE 29613541 U
(43) Veröffentlichungstag der Anmeldung: 27.01.1999
(73) Patentinhaber: SIEMENS AKTIENGESELLSCHAFT, 80333 München (DE)
(72) Erfinder: DÜLL, Hans-Jürgen, D-91094 Langensendelbach (DE); RATH, Bernhard, D-45966 Gladbeck (DE)
(86) Internationale Anmeldenummer: DE9700712
(87) Internationale Veröffentlichungsnummer: WO9738872

(56) Entgegenhaltungen:
- PATENT ABSTRACTS OF JAPAN vol. 96, no. 12, 26.Dezember 1996 & JP 08 205310 A (SUMITOMO PRECISION PROD CO LTD), 9.August 1996,
- PATENT ABSTRACTS OF JAPAN vol. 8, no. 61 (M-284), 23.März 1984 & JP 58 212302 A (NIPPON KOKUYU TETSUDO), 10.Dezember 1983,

## Beschreibung

Die Erfindung betrifft ein Schienenfahrzeug.

Ein derartiges Schienenfahrzeug, das wenigstens einen neigbaren Wagenkasten umfaßt, ist jeweils für sich z.B. durch die EP 0 436 993 A1 oder die EP 0 485 273 A1 bekannt. In beiden Fällen ist auf dem Dach des Wagenkastens ein Stromabnehmer entgegen der Neigung des Wagenkastens rückführbar, wobei der Wagenkasten um einen ersten Neigepol auf einem ersten Neigeradius neigbar ist und der Stromabnehmer mit seinem Träger um einen zweiten Neigepol auf einem zweiten Neigeradius neigbar ist Die beiden Neigepole können zusammenfallen, wobei der erste Neigepol, das ist der Neigepol für den Wagenkasten, nicht unbedingt eine konstante Lage aufweisen muß. Der zweite Neigeradius, das ist der Neigeradius für den Träger des Stromabnehmers, ist demgegenüber jedoch konstant. Aufgrund des konstanten zweiten Neigeradius verringert sich der Abstand zwischen dem Dach des Wagenkastens und dem Träger des Stromabnehmers und damit die Luftstrecke zwischen dem Stromabnehmerhorn und dem Wagenkasten auf der Seite, die der Neigung abgewandt ist. Das Dach des Wagenkastens wird deshalb entsprechend dem Neigepol und dem Neigeradius des Wagenkastens gekrümmt. Dies führt bei der Gestaltung des Fahrgastraumes zu Einschränkungen in der Höhe.

Weiterhin ist durch die JP 4-172 903 A ein Schienenfahrzeug mit einem neigbaren Wagenkasten bekannt. Auf dem Wagenkasten ist ein Stromabnehmer angeordnet. Das Stromabnehmergestell wird bei der in FIG 1 dieses Dokumentes dargestellten Ausgestaltung im rechten Winkel zur Hochachse und ohne zu neigen quer zum Wagenkasten verschoben. Damit liegt die Schleifleiste des Stromabnehmers nicht parallel zur Gleisebene und damit nicht waagrecht am Fahrdrahtspiegel an. Der zunehmende Abstand des Stromabnehmergestells zum Dach des Wagenkastens kann deshalb nur durch eine Krümmung des Daches erreicht werden.

In FIG 4 der JP 4-172 903 A ist ein Wagenkasten dargestellt, der um einen ersten Neigepol auf einem ersten Neigeradius neigbar ist und bei dem der Stromabnehmer mit seinem Träger entgegen der Neigung des Wagenkastens um einen zweiten Neigepol auf einem zweiten Neigeradius neigbar ist. Der zweite Neigeradius, das ist der Neigeradius für den Träger des Stromabnehmers, ist ebenfalls konstant. Aufgrund des konstanten zweiten Neigeradius verringert sich der Abstand zwischen der Dachebene, die rechtwinklig zur Hochachse des Wagenkastens verläuft, und dem Träger des Stromabnehmers und damit die Luftstrecke zwischen dem Stromabnehmerhorn und dem Wagenkasten auf der Seite, die der Neigung abgewandt ist. Das Dach des Wagenkastens wird deshalb wiederum entsprechend dem Neigepol und dem Neigeradius des Wagenkastens gekrümmt. Dies führt bei der Gestaltung des Fahrgastraumes zu Einschränkungen in der Höhe.

Ferner zeigt die von der Japanischen Botschaft in der Bundesrepublik Deutschland herausgegebene Broschüre "Neues aus Japan", März 1970, Nr. 156, eine schematische Darstellung eines als "Pendelwagen" bezeichneten Eisenbahnwagens. Der auf dem Dach angeordnete Stromabnehmer ist entgegen der Neigung des Wagenkastens rückführbar. Auch in diesem Fall muß das Dach des Wagenkastens gekrümmt ausgebildet sein.

In der Zeitschrift "ETR - Eisenbahntechnische Rundschau", Juli 1970, Heft 7, Seiten 295 und 296, ist ein Stromabnehmer beschrieben der entgegen der Neigung des Wagenkastens um rückführbar ist. Um diese Rückführung zu in Abhängigkeit von der Neigung des Wagenkastens zu erreichen, ist bei dieser Anordnung ein Übertragungsglied erforderlich, das in der Wagenseite eingebaut ist. Da auch hier der Neigeradius, um den der Stromabnehmer neigbar ist, einen konstanten Wert besitzt, muß das Dach des Wagenkastens wiederum gekrümmt ausgebildet sein.

Aufgabe der vorliegenden Erfindung ist es, ein Schienenfahrzeug der eingangs genannten Art zu schaffen, das trotz seines neigbaren Stromabnehmers hinsichtlich der konstruktiven Gestaltung des Wagenkastens keinen Einschränkungen unterliegt.

Die Aufgabe wird erfindungsgemäß durch die Merkmale im Anspruch 1 gelöst. Vorteilhafte Ausgestaltungen des Schienenfahrzeugs nach Anspruch 1 sind jeweils Gegenstand von weiteren Ansprüchen.

Das erfindungsgemäße Schienenfahrzeug umfaßt wenigstens einen neigbaren Wagenkasten, auf dessen Dach ein Stromabnehmer entgegen der Neigung des Wagenkastens rückführbar ist, wobei der Wagenkasten um einen ersten Neigepol auf einem ersten Neigeradius und der Stromabnehmer mit seinem Träger um einen zweiten Neigepol auf einem zweiten Neigeradius neigbar ist und der zweite Neigeradius mit zunehmendem Neigewinkel des Wagenkastens sich vergrößert.

Durch die Vergrößerung des zweiten Neigeradius vergrößert sich der Abstand zur Dachebene, die rechtwinklig zur Hochachse des Wagenkastens verläuft.

Bei einem Schienenfahrzeug nach Anspruch 1 kann das Dach des Wagenkastens im Bereich des Stromabnehmers sowohl innen als auch außen höher ausgeführt werden. Damit kann im Dachbereich des Wagenkastens ein höherer Längsholm angeordnet werden, wodurch die Stabilität des Wagenkastens erhöht wird.

Gleichzeitig ergeben sich hierdurch auch Kosteneinsparungen, da aufwendige Verstärkungen im unteren Bereich des Wagenkastens entfallen. Selbst bei Wagenkästen, die aus Aluminium gefertigt sind, wirken sich die Wagenkastenverwindungen aufgrund von Materialelastizitäten nicht auf die Befestigung der Stromabnehmerführung aus. Dies führt auch zu einer mechanischen Entlastung der Stützisolatoren zwischen dem Träger des Stromabnehmers und dem Dach des Wagenkastens.

Weitere Vorteile und Einzelheiten der Erfindung ergeben sich aus der nachfolgenden Beschreibung von Ausführungsbeispielen anhand der Zeichnung und in Verbindung mit den weiteren Ansprüchen. Es zeigen:
- FIG 1: eine Prinzipdarstellung der Stromabnehmerführung bei dem erfindungsgemäßen Schienenfahrzeug,
- FIG 2: eine stirnseitige Ansicht auf eine erste Ausführungsform des erfindungsgemäßen Schienenfahrzeugs im Dachbereich des Wagenkastens,
- FIG 3: eine Draufsicht auf das Fahrzeug gemäß FIG 2,
- FIG 4: eine Seitenansicht auf das Schienenfahrzeug gemäß FIG 2 im Dachbereich des Wagenkastens,
- FIG 5: eine stirnseitige Ansicht auf die dritte Ausführungsform des erfindungsgemäßen Schienenfahrzeugs im Dachbereich des Wagenkastens,
- FIG 6: eine Draufsicht auf das Fahrzeug gemäß FIG 5,
- FIG 7: eine Seitenansicht auf das Fahrzeug gemäß FIG 5 im Dachbereich des Wagenkastens,
- FIG 8: eine Draufsicht auf eine Lenkeranordnung gemäß dem Stromabnehmer nach FIG 6,
- FIG 9: eine Stirnansicht von am Fahrzeug befestigten Lagergehäusen,
- FIG 10: eine stirnseitige Ansicht auf eine vierte Ausführungsform des erfindungsgemäßen Schienenfahrzeugs im Dachbereich des Wagenkastens,
- FIG 11: eine stirnseitige Ansicht auf eine fünfte Ausführungsform des erfindungsgemäßen Schienenfahrzeugs im Dachbereich des Wagenkastens,
- FIG 12: eine Draufsicht auf das Fahrzeug gemäß FIG 11,
- FIG 13: eine Seitenansicht auf das Fahrzeug gemäß FIG 11,
- FIG 14: eine Seitenansicht auf eine sechste Ausführungsform des erfindungsgemäßen Schienenfahrzeugs im Dachbereich des Wagenkastens,
- FIG 15: eine Draufsicht auf das Fahrzeug gemäß FIG 14 im Bereich der breiten Stirnseite des Trägers für den Stromabnehmer,
- FIG 16: eine Seitenansicht auf eine siebte Ausführungsform des erfindungsgemäßen Schienenfahrzeugs im Dachbereich des Wagenkastens,
- FIG 17: eine Draufsicht auf das Fahrzeug gemäß FIG 16,
- FIG 18: eine Draufsicht auf das Fahrzeug gemäß FIG 16 und 17, wobei der Stromabnehmer gegenüber der Stellung in FIG 17 ausgelenkt ist.

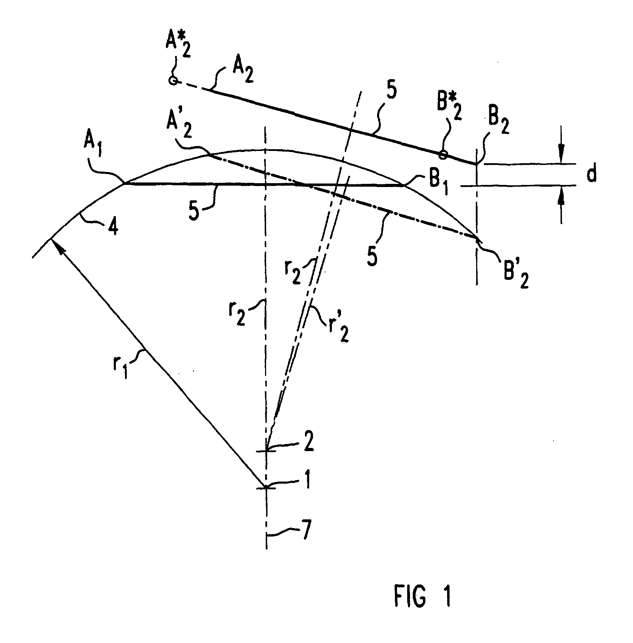

In FIG 1 ist mit 1 ein erster Neigepol und mit 2 ein zweiter Neigepol bezeichnet. Um den ersten Neigepol 1 ist ein Wagenkasten 3 eines Schienenfahrzeuges um einen ersten Neigeradius r₁ (durchgezogene Linie) neigbar. In FIG 1 ist nur der Kreisbogen, auf dem sich das Dach 4 des Wagenkastens 3 bewegt, dargestellt.

Um den zweiten Neigepol 2 ist ein Träger 5 eines Stromabnehmers 6 um einen zweiten Neigeradius r₂ (strichpunktierte Linie) neigbar. Der Träger 5 und damit auch der Stromabnehmer 6 werden hierbei entgegen der Neigung des Wagenkastens 3 zurückgeführt, so daß die Schleifleiste 8 des Stromabnehmers 6 immer nahezu waagrecht am Fahrdrahtspiegel (das ist die Fläche des Fahrdrahtes 9, an der die Schleifleiste 8 entlanggleitet) anliegt. Sowohl der erste Neigepol 1 als auch der zweite Neigepol 2 liegen in einer Hochachse 7, die in der Längsachse des Wagenkastens 3 angeordnet ist.

Die Ecken des Trägers 5 sind mit A und B bezeichnet, wobei der Index 1 die ungeneigte Stellung (Neigewinkel 0°) und der Index 2 die geneigte Stellung kennzeichnet, d.h. die Ecke A des Trägers 5 wandert von A₁ nach A₂ und die Ecke B von B₁ nach B₂.

Erfindungsgemäß vergrößert sich der zweite Neigeradius r₂ mit zunehmenden Neigewinkel des Wagenkastens 3. Bei den bekannten Schienenfahrzeugen bleibt der zweite Neigeradius konstant (in FIG 1 als gestrichelte Linie dargestellt und mit r'₂ bezeichnet), d.h. der Träger 5 wird auf einem Kreisbogen geführt. Bei geneigter Stellung ergeben sich damit für die Ecken A und B des Trägers 5 die mit A'₂, B'₂ bezeichneten Positionen (Ecke A wandert von A₁ nach A'₂ und Ecke B von B₁ nach B'₂).

Bei dem erfindungsgemäßen Schienenfahrzeug ergibt sich damit gegenüber einem konstanten Neigeradius eine Vergrößerung des Abstandes zwischen dem Dach 4 des Wagenkastens 3 und dem Träger 5 des Stromabnehmers 6 um d, bzw. um einen Betrag zwischen B'₂ und B₂.

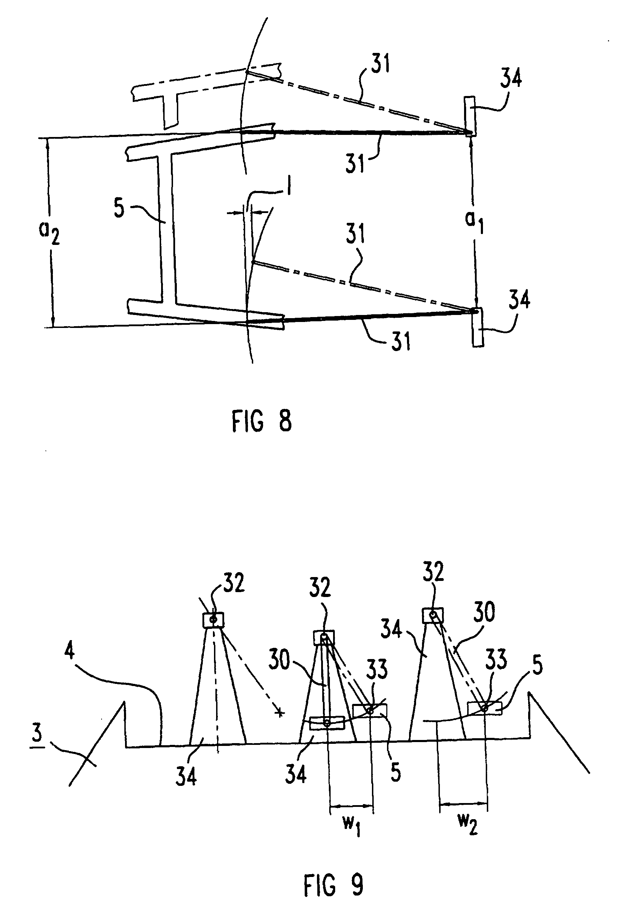

Gemäß einer besonders vorteilhaften Ausgestaltung der Erfindung können die Stirnseiten des Trägers 5 des Stromabnehmers 6 hierzu abweichend geführt sein. Diese abweichende, in FIG 9 erläuterte Führung ist in FIG 1 mit A*₂ und B*₂ gekennzeichnet.

Bei der in FIG 1 gezeigten Prinzipdarstellung ist der erste Neigepol 1 vom zweiten Neigepol 2 beabstandet. Das erfindungsgemäße Prinzip ist jedoch genausogut realisierbar, wenn der erste Neigepol 1 und der zweite Neigepol 2 zusammenfallen. Auch hier ist die Ecke B des Trägers 5 gegenüber der Position B'₂ um den Abstand d angehoben.

Um den Abstand d nochmals zu vergrößern, ist es im Rahmen der Erfindung außerdem möglich, daß der zweite Neigepol 2 beim Neigen des Wagenkastens 3 entlang der Hochachse 7 wandert.

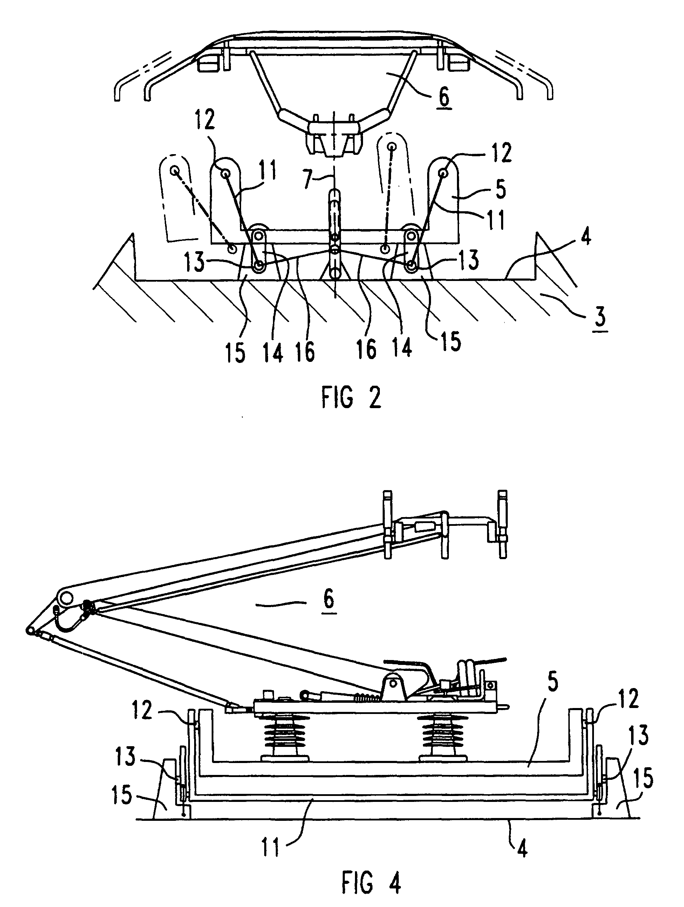

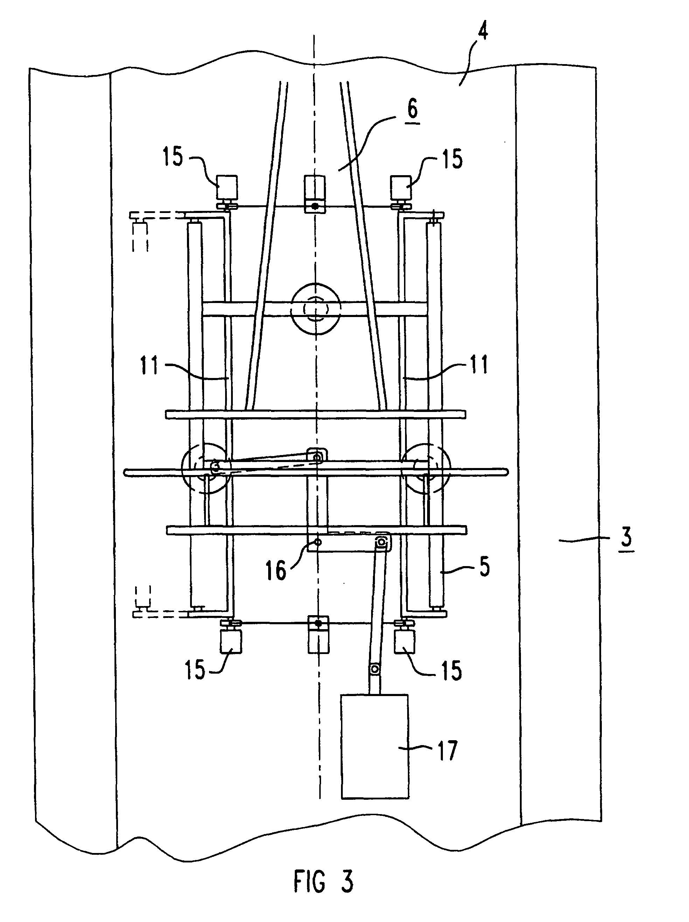

Bei dem in FIG 2 bis 4 gezeigten Ausführungsbeispiel wird der Träger 5 des Stromabnehmers 6 von Lenkern 11 geführt, die an den beiden Längsseiten des Trägers 5 angeordnet sind. Beide Lenker 11 sind jeweils über zwei obere Lenkerlager 12 und über zwei untere Lenkerlager 13 mit dem Dach 4 des Wagenkastens 3 verbunden. Die oberen Lenkerlager 12 sind hierbei an den Stirnseiten des Trägers 5 angeordnet. Die unteren Lenkerlager 13 liegen ebenfalls an den Stirnseiten des Trägers 5 und sind über Exzenterhebel 14, die jeweils in einem Lagergehäuse 15 gelagert sind, über diese Lagergehäuse 15 mit dem Dach 4 des Wagenkastens 3 verbunden. Der Träger 5 wird bei einer Neigung des Wagenkastens 3 über ein Gestänge 16, das von einem Antrieb 17 betätigt wird, entgegen der Neigung des Wagenkastens 3 zurückgeführt, wobei durch die Exzenterhebel 14 gleichzeitig der zweite Neigeradius r₂ entsprechend der Neigung des Wagenkastens 3 vergrößert wird. Durch die Länge der Exzenterhebel 14 sowie deren Anordnung über obere Lenkerlager 12 und untere Lenkerlager 13 kann die beim zweiten Neigeradius r₂ gewünschte bzw. erforderliche Vergrößerung an die jeweiligen Gegebenheiten angepaßt werden. Die relative Neigung des Trägers 5 gegenüber dem Wagenkasten 3 ist in FIG 2 gestrichelt dargestellt.

Der Antrieb 17 ist im gezeigten Ausführungsbeispiel auf dem Dach 4 des Wagenkastens 3 angeordnet. Es ist jedoch auch möglich, den Antrieb 17 im unteren Bereich des Wagenkastens 3 anzuordnen.

Anstelle der Exzenterhebel 14 können auch Exzenterscheiben vorgesehen sein, die dann an beiden Stirnseiten des Trägers 5 anzuordnen sind. Die Exzenterscheiben sind mit ihrem Mittelpunkt in einem Lagergehäuse gelagert, das auf dem Dach 4 des Wagenkastens 3 befestigt ist. Die Exzenterscheiben weisen weiterhin einen Exzenterarm auf, der mit seinem ersten Ende mit der Exzenterscheibe und mit seinem zweiten Ende, das über dem ersten Ende liegt, mit dem Stromabnehmer 6 verbunden ist. Die Lagerung des Exzenterarms im Stromabnehmer 6 ist gleichzeitig mit dem Träger 5 des Stromabnehmer 6 mechanisch verbunden. Auch hier ist die Dimensionierung der Exzenterscheibe sowie des Exzenterarms im Hinblick auf die gewünschte Optimierung variabel.

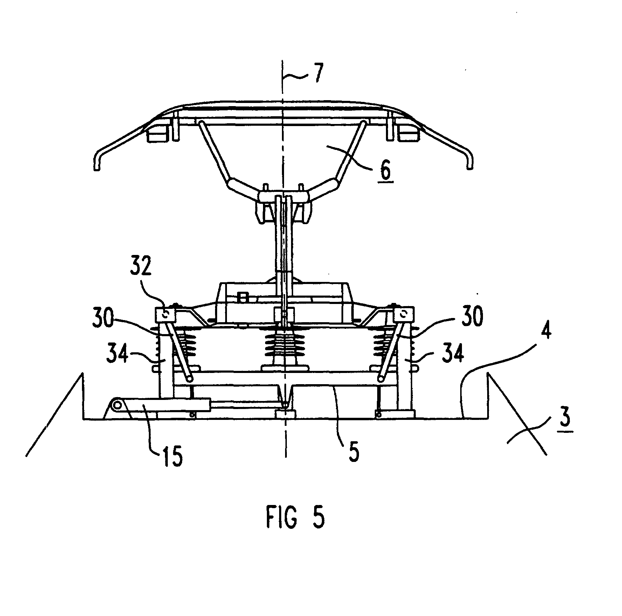

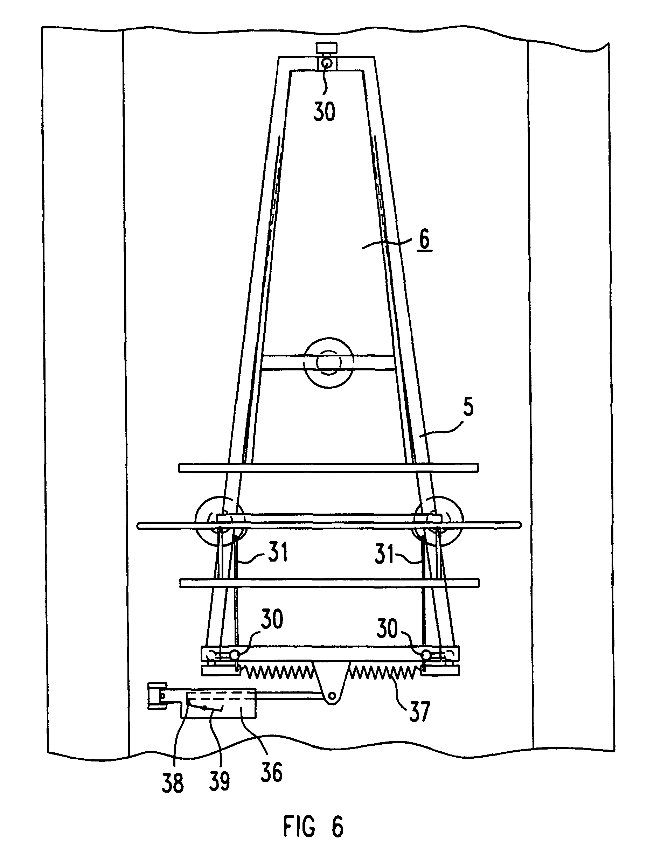

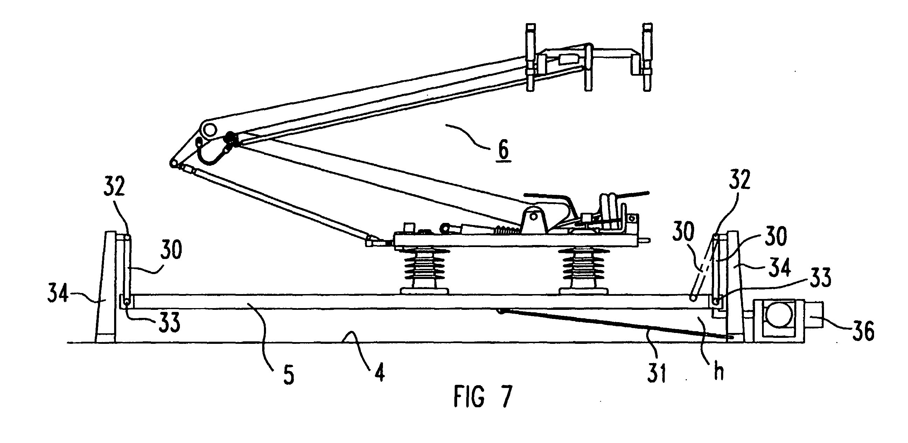

Bei dem Ausführungsbeispiel gemäß FIG 5 bis 9 ist der Träger 5 des Stromabnehmers 6 über Lenker 30 und Seitenführungslenker 31 geführt. Zwei Lenker 30 sind an der breiten Stirnseite des Trägers 5 und ein Lenker 30 ist an der schmalen Stirnseite des Trägers 5 angeordnet. Es können jedoch auch zwei Lenker 30 an jeder Stirnseite angeordnet sein. Die Lenker 30 sind über ein oberes Lenkerlager 32 und über ein unteres Lenkerlager 33 mit dem Dach 4 des Wagenkastens 3 verbunden. Die unteren Lenkerlager 33 sind hierbei an den Stirnseiten des Trägers 5 angeordnet. Die oberen Lenkerlager 32 liegen ebenfalls an den Stirnseiten des Trägers 5 und sind in jeweils einem Lagergehäuse 34 angeordnet, das starr mit dem Dach 3 des Wagenkastens 4 verbunden ist. Das Lagergehäuse bildet somit den unbeweglichen Lagerarm.

Der Träger 5 des Stromabnehmers 6 ist bei dieser Ausführungsform direkt, also ohne Zwischenschaltung eines Gestänges mit einem Antrieb 36 verbunden.

Bei Ausfall-des Antriebs 36 kann der Träger 5 des Stromabnehmers 6 durch Federspeicherantrieb 37 und 38 sowie eine Klinke 39 zur Fahrzeugmitte mechanisch fixiert werden.

Befindet sich der Träger 5 des Stromabnehmers 6 mittig zum Wagenkasten 3, so sind die Lenker 30 annähernd senkrecht oder schräg angeordnet. Seitlich wird der Träger 5 des Stromabnehmers 6 durch die beiden Seitenführungs-Längslenker 31 geführt. Gerät der Stromabnehmer 6, und damit auch sein Träger 5, außer Fahrzeugmitte, d.h. außerhalb der Hochachse 7, dann tritt aufgrund der Auslenkung der Seitenführung 31 eine Abstandsdifferenz 1 auf, die bei dem Träger 5 des Stromabnehmers 6 zu einer Höhendifferenz h führt. Die Abstandsmaße a₁ bzw. a₂ der Seitenführungslenker 31 können hierbei unterschiedlich sein bzw. an den jeweiligen Anwendungsfall angepaßt werden.

Die auf dem Dach 4 des Wagenkastens 3 befestigten Lagergehäuse 34 weisen eine unterschiedliche Höhe auf. So sind die beiden Lagergehäuse 34, die an der breiten Stirnseite des Trägers 5 befestigt sind, gegenüber dem Lagergehäuse 34, das an der schmalen Stirnseite des Trägers 5 angeordnet ist, höher. Für den Träger 5 des Stromabnehmers 6 ergeben sich dadurch stirnseitig unterschiedliche Schwenkwege w₁ und w₂. Die Länge der Lenker 30 ist hierbei so gewählt, daß der Träger 5 des Stromabnehmers 6 in konstanter Höhe über dem Dach 4 des Wagenkastens 3 verläuft. Damit stellt sich der Träger 5 tangential zum Gleisradius ein.

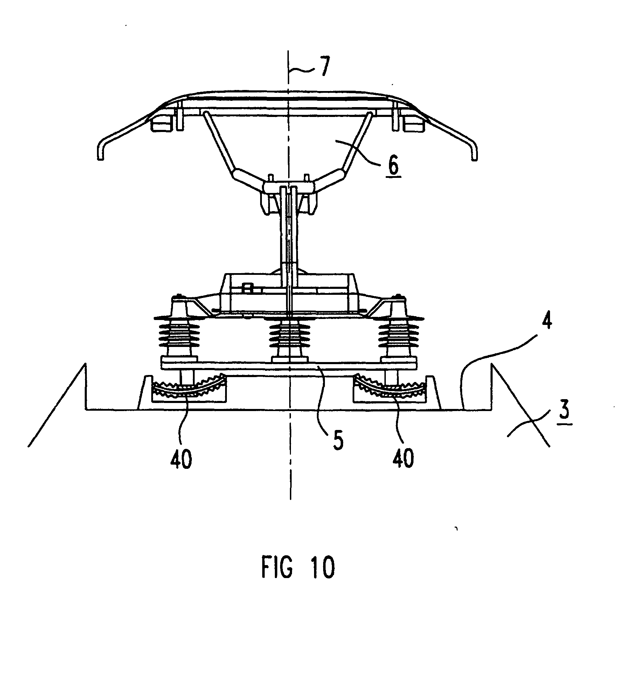

Bei der in FIG 10 dargestellten Ausführungsform ist der Träger 5 in gekrümmt ausgebildeten Gleit- oder Wälzlagern 40 gelagert. Aufgrund der gekrümmten (konkaven oder konvexen) Ausbildung der Gleit- oder Wälzlagern 40 führt ein Neigen des Wagenkastens 3 zu einer gegenläufigen Neigung des Trägers 5 und damit des Stromabnehmers 6.

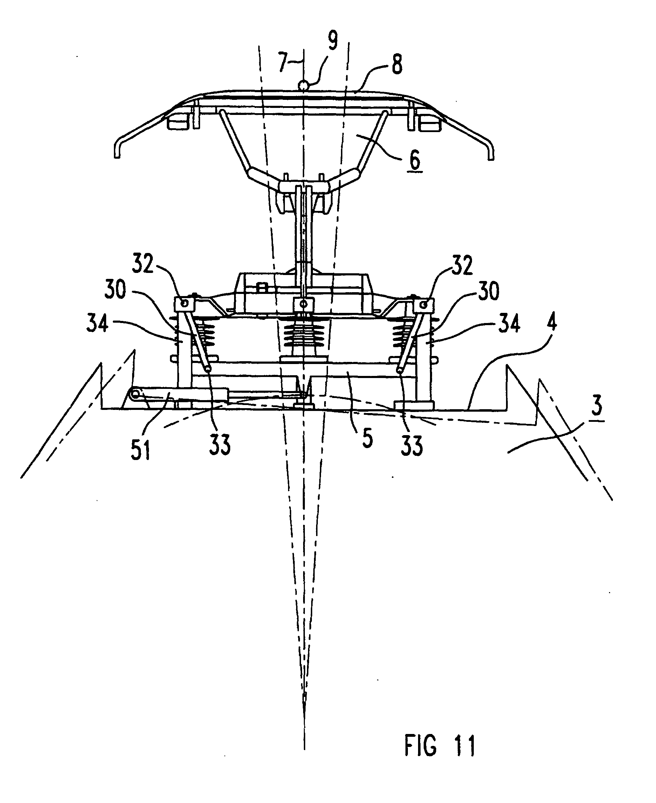

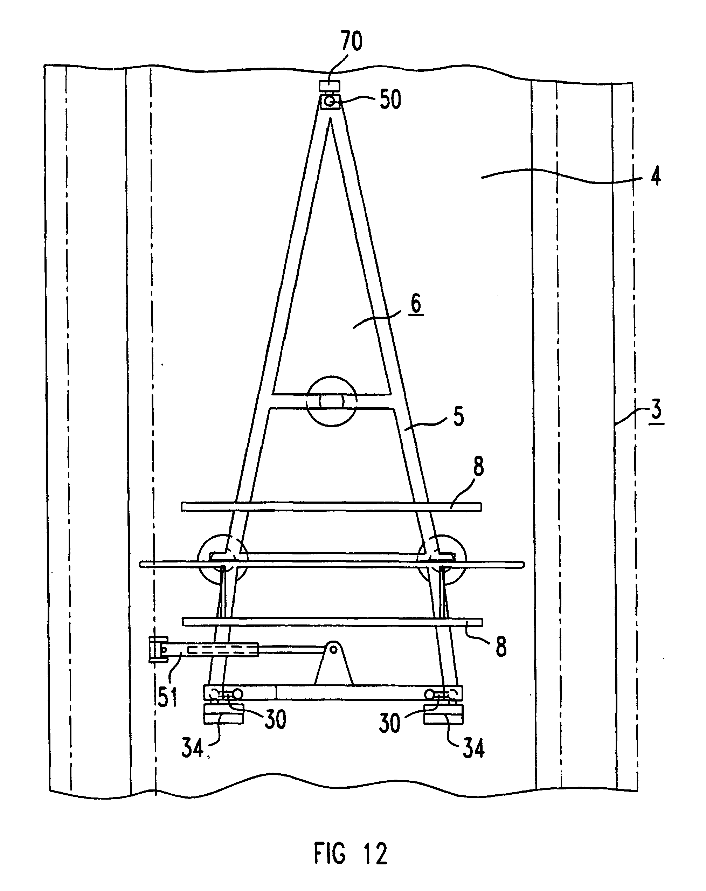

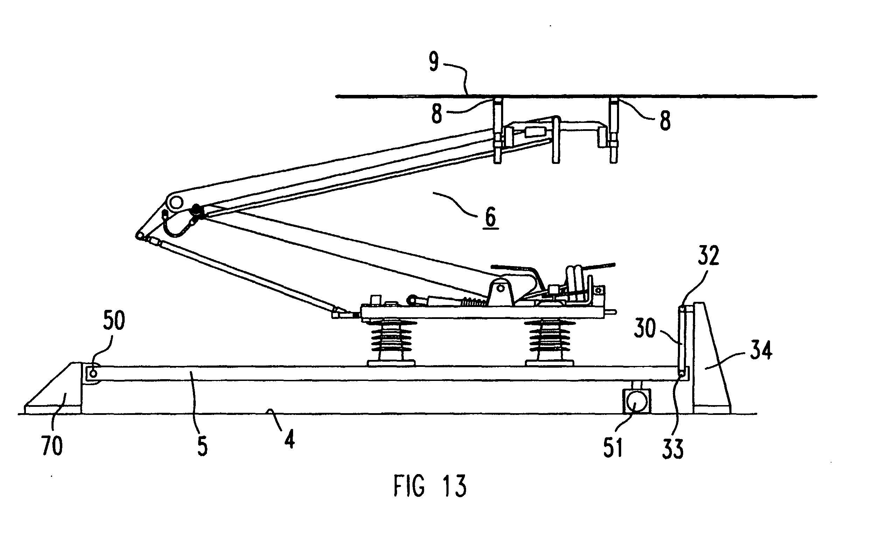

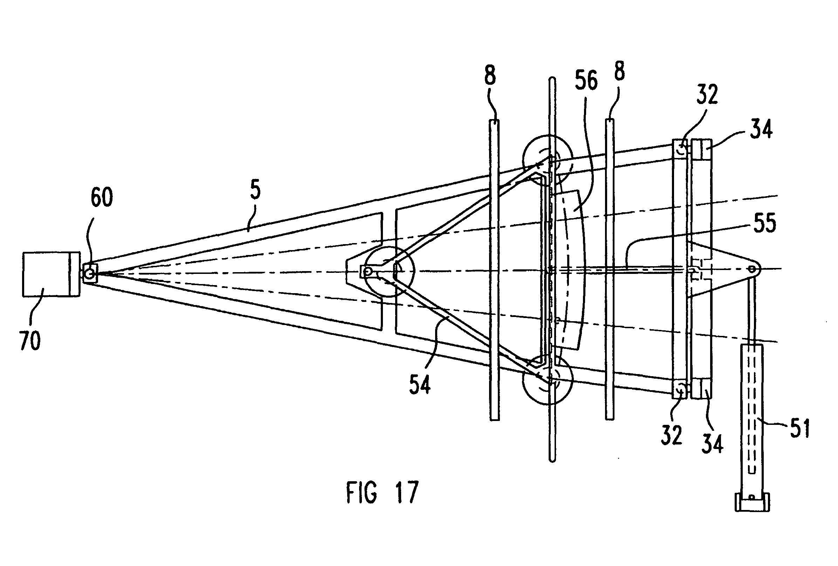

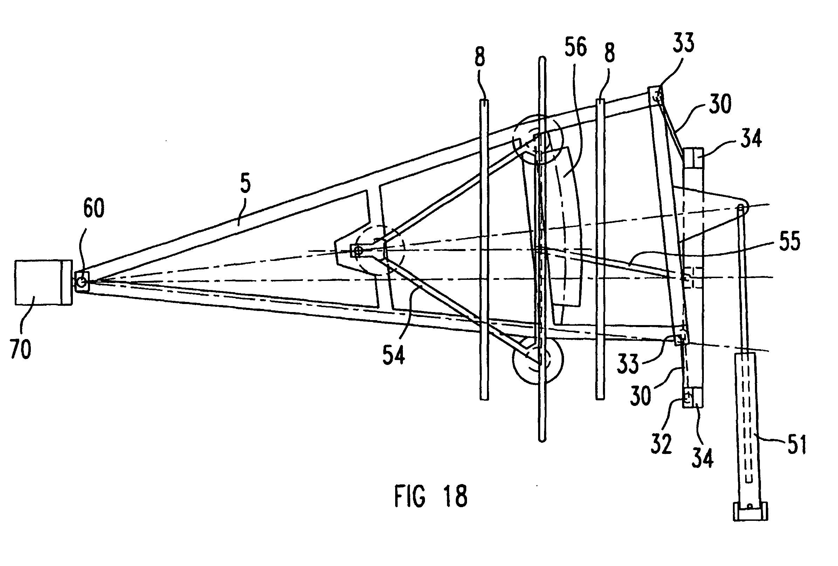

In den FIG 11 bis 18 ist mit 3 ein Wagenkasten eines Schienenfahrzeugs bezeichnet, der um einen ersten Neigepol auf einem ersten Neigeradius r₁ neigbar ist. Auf dem Dach 4 des Wagenkastens 3 ist ein Träger 5 für einen Stromabnehmer 6 angeordnet. Der Träger 5 ist um einen zweiten Neigepol auf einem zweiten Neigeradius r₂ neigbar. Der Träger 5 und damit auch der Stromabnehmer 6 werden hierbei entgegen der Neigung des Wagenkastens 3 zurückgeführt, so daß die Schleifleiste 8 des Stromabnehmers 6 immer nahezu waagrecht am Fahrdrahtspiegel (das ist die Fläche des Fahrdrahtes 9, an der die Schleifleiste 8 entlanggleitet) anliegt. In FIG 11 ist der geneigte Wagenkasten 3 gestrichelt dargestellt. Sowohl der erste Neigepol als auch der zweite Neigepol liegen im Bereich der Schleifleiste 8 in einer Hochachse 7, die in der Längsachse des Wagenkastens 3 angeordnet ist.

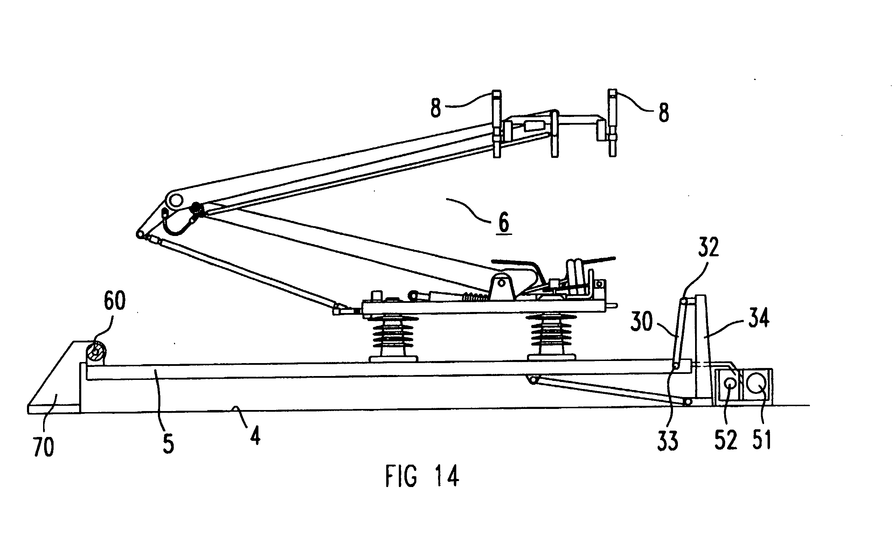

Der Träger 5 des Stromabnehmers 6 ist von zwei Lenkern 30 geführt, die an der breiten Stirnseite des Trägers 5 angeordnet sind. Weiterhin ist der Träger 5 an seiner schmalen Stirnseite über ein Lager 50 (FIG 11 bis 13) bzw. über ein Lager 60 (FIG 14 bis 18) abgestützt.

Die Lenker 30 sind über ein oberes Lenkerlager 32 und über ein unteres Lenkerlager 33 mit dem Dach 4 des Wagenkastens 3 verbünden. Die unteren Lenkerlager sind hierbei an der breiten Stirnseite des Trägers 5 angeordnet. Die oberen Lenkerlager 32 liegen ebenfalls an der breiten Stirnseite des Trägers 5 und sind jeweils in einem Lagergehäuse 34 angeordnet, das starr mit dem Dach 4 des Wagenkastens 3 verbunden ist. Das Lagergehäuse 34 bildet somit jeweils den unbeweglichen Lagerarm.

Die Lager 50 und 60, die jeweils in einem starr mit dem Dach 4 des Wagenkastens 3 verbundenen Lagergehäuse 70 angeordnet sind, erlauben sowohl eine von den Lenkern 30 verursachte Schwenkbewegung als auch eine von den Lenkern 30 verursachte Kippbewegung des Trägers 5 zum Dach 4 des Wagenkastens 3 hin. Das Lager 60 ist darüber hinaus auch noch in Längsachse des Wagenkatens 3 beweglich.

Gemäß einer weiteren, in den FIG 11 bis 18 nicht dargestellten Ausführungsform kann das Lager auch als elastisches Lager ausgebildet sein und dann in x-Achse und/oder in y-Achse und/oder in z-Achse unterschiedliche Steifigkeiten und damit unterschiedliche Rückstellkräfte aufweisen. Weiterhin kann das Lager 50 bzw 60 auch außermittig zur Längsachse des Wagenkastens 3 und/oder höhenversetzt zur breiten Stirnseite des Trägers 5 angeordnet sein.

Bei den in den FIG 11 bis 18 dargestellten Ausführungsbeispielen erhält man durch die beiden Lenker 30 an der breiten Stirnseite des Trägers 5 und durch das Lager 50 bzw. 60 an der schmalen Stirnseite des Trägers 5 eine Dreipunktlagerung für den Träger 5.

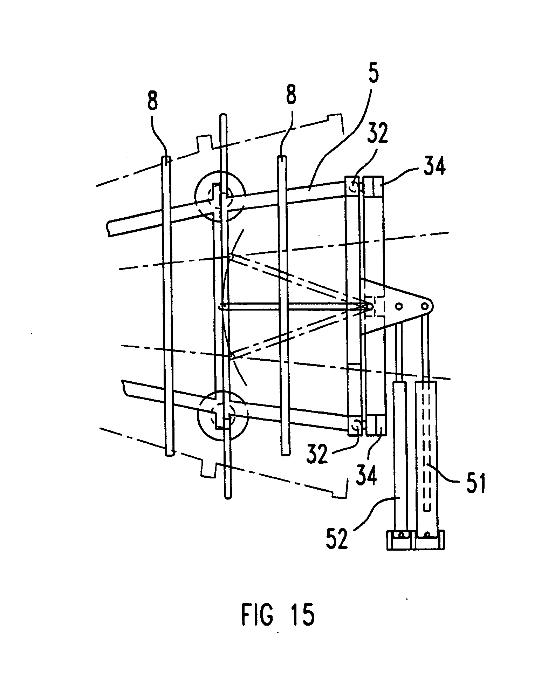

Bei den in FIG 11 bis 18 gezeigten Ausgestaltungen des erfindungsgemäßen Schienenfahrzeugs ist der Träger 5 des Stromabnehmers 6 an seiner breiten Stirnseite mit einem Stellantrieb 51 verbunden, wobei das Ausführungsbeispiel gemäß den FIG 14 und 15 zusätzlich ein Dämpfungselement 52 aufweist, das parallel zum Stellantrieb 51 angeordnet ist und den aktiven Stellvorgang dämpft.

Bei der Ausführungsform gemäß FIG 14 und 15 ist der Träger 5 im Bereich seiner breiten Stirnseite über einen Seitenführungslenker 53 mit dem Fuß des Lagergehäuses 34 gelenkig verbunden. Durch diese Anordnung des Seitenführungslenkers 53 ist sichergestellt, daß Druck- und Zugkräfte in Längsrichtungen hauptsächlich vom Seitenführungslenker aufgenommen werden.

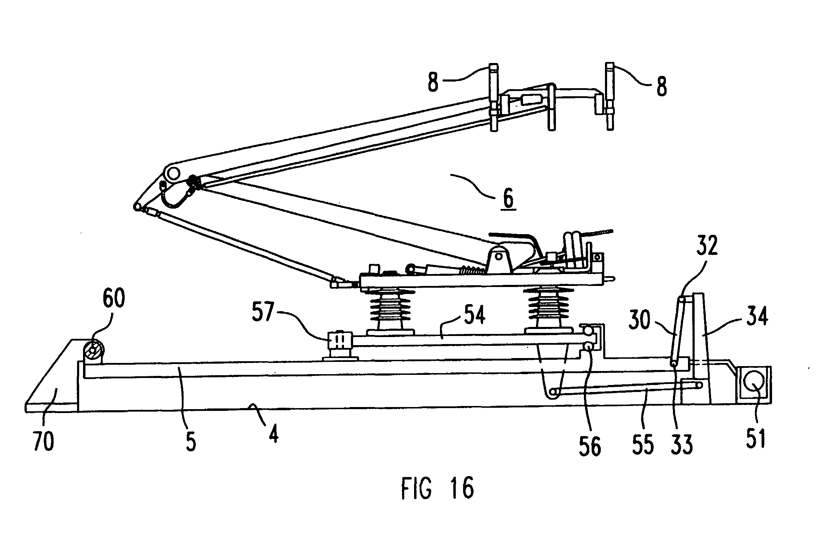

Bei der in den FIG 16 bis 18 dargestellten Ausführungsform ist zwischen dem Träger 5 und dem Stromabnehmer 6 ein Zwischenträger 54 angeordnet. Der Zwischenträger 54 ist waagrecht drehbar auf dem Träger 5 gelagert.

Der Zwischenträger 54 ist im dargestellten Ausführungsbeispiel durch einen Seitenführungslenker 55 geführt. Der Seitenführungslenker 55 ist hierzu einerseits mit der breiten Stirnseite des Zwischenträgers 54 und andererseits mit dem Fuß des Lagergehäuses 34 gelenkig verbunden.

Anstelle einer Führung durch einen Seitenführungslenker 55 kann der Zwischenträger 54 auch durch einen Stellantrieb geführt sein.

Im gezeigten Ausführungsbeispiel erfolgt die Lagerung des Zwischenträgers 54 an seiner breiten Stirnseite über ein Wälzlager 56 und an seiner schmalen Stirnseite durch ein elastisches Lager 57.

Die Anordnung eines Zischenträgers 54 ist nicht auf das in FIG 16 bis 18 gezeigte Ausführungsbeispiel, das eine Modifikation der Ausführungsform gemäß den FIG 14 und 15 darstellt, beschränkt. Vielmehr ist ein Zwischenträger 54 auch bei anderen Ausführungsformen möglich.

Durch die Anordnung des Zwischenträgers 54 kann der Stromabnehmer 6 annähernd parallel zur Längsachse des Wagenkastens 3 ausgerichtet werden, wodurch der für den Stromabnehmer 6 benötigte Schwenkbereich nochmals verringert wird. Dadurch wird der auf dem Dach 4 des Wagenkastens 3 zur Verfügung stehende Einbauraum nochmals vergrößert.

Die in den FIG 2 bis 18 dargestellten Ausführungsbeispiele sind konstruktiv einfach und mechanisch robust. Sie sind weiterhin gegen Umwelteinflüsse, insbesondere Verschutzung und klimatische Einflüsse im Winterbetrieb, gut abzudichten und somit sicher in ihrer mechanischen Funktion.

Die gesamte Anordnung ist ausschließlich auf dem Dach 4 des Wagenkastens 3 angeordnet. Verbindungen zwischen Stromabnehmer und Fahrwerk (z.B. Portal) sowie Durchführungen hierfür sind nicht erforderlich. Damit sind keine Einschränkungen des Fahrgastraumes notwendig. Weiterhin sind keine speziell angepaßten Wagenkästen erforderlich.

## Patentansprüche

1. Schienenfahrzeug, das folgende Merkmale umfaßt:
- wenigstens einen neigbaren Wagenkasten (3), auf dessen Dach (4) ein Stromabnehmer (6) entgegen der Neigung des Wagenkastens (3) rückführbar ist, wobei
- der Wagenkasten (3) um einen ersten Neigepol (1) auf einem ersten Neigeradius (r₁) neigbar ist und
- der Stromabnehmer (6) mit seinem Träger (5) um einen zweiten Neigepol (2) auf einem zweiten Neigeradius (r₂) neigbar ist, **dadurch gekennzeichnet, daß** sich
- der zweite Neigeradius (r₂) mit zunehmendem Neigewinkel des Wagenkastens (3) vergrößert.

2. Schienenfahrzeug nach Anspruch 1, wobei der erste Neigepol (1) und der zweite Neigepol (2) voneinander beabstandet sind.

3. Schienenfahrzeug nach Anspruche 1 oder 2, wobei der zweite Neigepol (2) beim Neigen des Wagenkastens (3) entlang einer in der Längsachse des Wagenkastens (3) angeordneten Hochachse (7) wandert.

4. Schienenfahrzeug nach Anspruch 1, wobei der Träger (5) des Stromabnehmers (6) von Lenkern (11) geführt ist, die an den beiden Längsseiten des Trägers (5) angeordnet sind.

5. Schienenfahrzeug nach Anspruch 4, wobei beide Lenker (11) jeweils über zwei obere Lenkerlager (12) und über zwei untere Lenkerlager (13) mit dem Dach (4) des Wagenkastens (3) verbunden ist.

6. Schienenfahrzeug nach Anspruch 5, wobei die oberen Lenkerlager (12) und die unteren Lenkerlager (13) an den Stirnseiten des Trägers (5) angeordnet sind und über Exzenterhebel (14), die jeweils in einem Lagergehäuse (15) gelagert sind, über diese Lagergehäuse (15) mit dem Dach (4) des Wagenkastens (3) verbunden sind.

7. Schienenfahrzeug nach Anspruch 6, wobei der Träger (5) bei einer Neigung des Wagenkastens (3) über ein Gestänge (16), das von einem Antrieb (17) betätigbar ist, entgegen der Neigung des Wagenkastens (3) rückführbar ist,und wobei durch die Exzenterhebel (14) gleichzeitig der zweite Neigeradius (r₂) entsprechend der Neigung des Wagenkastens (3) vergrößert wird.

8. Schienenfahrzeug nach Anspruch 7, wobei der Antrieb (17) auf dem Dach (4) des Wagenkastens (3) angeordnet ist.

9. Schienenfahrzeug nach Anspruch 7, wobei der Antrieb (17) im unteren Bereich des Wagenkastens (3) angeordnet ist.

10. Schienenfahrzeug nach Anspruch 1, wobei der Träger (5) des Stromabnehmers (6) direkt mit einem Antrieb (36) verbunden ist.

11. Schienenfahrzeug nach Anspruch 1, wobei der Träger (5) des Stromabnehmers (6) über ein Gestänge mit einem Antrieb (36) verbunden ist.

12. Schienenfahrzeug nach Anspruch 10, wobei der Träger (5) des Stromabnehmers (6) über Lenker (30) und Seitenführungslenker (31) geführt ist.

13. Schienenfahrzeug nach Anspruch 12, wobei zwei Lenker (30) an der breiten Stirnseite des Trägers (5) und ein Lenker (30) an der schmalen Stirnseite des Trägers (5) angeordnet sind.

14. Schienenfahrzeug nach Anspruch 2, wobei zwei Lenker (30) an jeder Stirnseite angeordnet sind.

15. Schienenfahrzeug nach Anspruch 12, wobei die Lenker (30) über ein oberes Lenkerlager (32) und über ein unteres Lenkerlager (33) mit dem Dach (4) des Wagenkastens (3) verbunden sind.

16. Schienenfahrzeug nach Anspruch 15, wobei die unteren Lenkerlager (33) und die oberen Lenkerlager (32) an den Stirnseiten des Trägers (5) in jeweils einem Lagergehäuse (34) angeordnet sind, das starr mit dem Dach (3) des Wagenkastens (4) verbunden ist.

17. Schienenfahrzeug nach Anspruch 1, wobei der Träger (5) des Stromabnehmers (6) bei Ausfall des Antriebs (36) durch wenigstens einen Federspeicherantrieb (37, 38) und eine Klinke (39) zur Fahrzeugmitte mechanisch fixbar ist.

18. Schienenfahrzeug nach Anspruch 16, wobei die beiden Lagergehäuse (34), die an der breiten Stirnseite des Trägers (5) befestigt sind, gegenüber dem Lagergehäuse (34), das an der schmalen Stirnseite des Trägers 5 angeordnet ist, höher sind.

19. Schienenfahrzeug nach Anspruch 17, wobei die Länge der Lenker (30) derart gewählt ist, daß der Träger (5) des Stromabnehmers (6) in konstanter Höhe über dem Dach (4) des Wagenkastens (3) verläuft.

20. Schienenfahrzeug nach Anspruch 1, wobei der Träger (5) in gekrümmt ausgebildeten Gleit- oder Wälzlagern (40) gelagert ist.

21. Schienenfahrzeug nach Anspruch 1, wobei der Träger (5) des Stromabnehmers (6) von zwei Lenkern (30) geführt ist, die an der breiten Stirnseite des Trägers (5) angeordnet sind, und über ein Lager (50, 60) abgestützt ist, das an der schmalen Stirnseite des Trägers (5) angeordnet ist.

22. Schienenfahrzeug nach Anspruch 21, wobei das Lager (50, 60) sowohl eine von den Lenkern (30) verursachte Schwenkbewegung als auch eine von den Lenkern (30) verursachte Kippbewegung des Trägers (5) zum Dach (4) des Wagenkastens (3) hin erlaubt.

23. Schienenfahrzeug nach Anspruch 22, wobei das Lager (60) in Längsachse des Wagenkastens (3) beweglich ausgebildet ist.

24. Schienenfahrzeug nach Anspruch 23, wobei das Lager als elastisches Lager ausgebildet ist.

25. Schienenfahrzeug nach Anspruch 24, wobei das Lager in x-Achse und/oder in y-Achse und/oder in der z-Achse unterschiedliche Steifigkeiten aufweist.

26. Schienenfahrzeug nach Anspruch 21, wobei die Lenker (30) in einem oberen Lenkerlager (32) eines Lagergehäuses (34) um eine horizontale Achse in Längsrichtung des Wagenkastens (3) schwenkbar sind.

27. Schienenfahrzeug nach Anspruch 21, wobei der Träger (5) des Stromabnehmers (6) durch einen Seitenführungslenker (53) geführt ist, der im Bereich der breiten Stirnseite des Trägers (5) mit dem Träger (5) gelenkig verbunden ist.

28. Schienenfahrzeug nach Anspruch 21, wobei zwischen dem Träger (5) und dem Stromabnehmer (6) ein Zwischenträger (54) angeordnet ist, der waagrecht drehbar auf dem Träger (5) gelagert ist.

29. Schienenfahrzeug nach Anspruch 28, wobei der Zwischenträger (54) durch einen Seitenführungslenker(55) geführt ist, der mit der breiten Stirnseite des Zwischenträgers (54) gelenkig verbunden ist.

30. Schienenfahrzeug nach Anspruch 28, wobei der Zwischenträger (54) durch einen Stellantrieb geführt ist.

31. Schienenfahrzeug nach Anspruch 28, wobei der Zwischenträger (54) an seiner breiten Stirnseite mittels eines Wälzlagers (56) und an seiner schmalen Stirnseite mittels eines elastischen Lagers (57) gelagert ist.

## Claims

1. Rail vehicle, which comprises the following features:
- at least one tiltable coach body (3), on the roof (4) of which a current collector (6) is restorable counter to the tilting of the coach body (3), wherein
- the coach body (3) is tiltable about a first tilting pole (1) on a first tilting radius (r₁) and
- the current collector (6) with its carrier (5) is tiltable about a second tilting pole (2) on a second tilting radius (r₂),
**characterized in that**
- the second tilting radius (r₂) increases, as the angle of inclination of the coach body (3) increases.

2. Rail vehicle according to claim 1, wherein the first tilting pole (1) and the second tilting pole (2) are disposed at a distance from one another.

3. Rail vehicle according to claims 1 or 2, wherein, as the coach body (3) tilts, the second tilting pole (2) moves along a vertical axis (7) disposed in the longitudinal axis of the coach body (3).

4. Rail vehicle according to claim 1, wherein the carrier (5) of the current collector (6) is guided by connecting rods (11), which are disposed on the two longitudinal sides of the carrier (5).

5. Rail vehicle according to claim 4, wherein each of the two connecting rods (11) is connected by two upper connecting rod bearings (12) and by two lower connecting rod bearings (13) to the roof (4) of the coach body (3).

6. Rail vehicle according to claim 5, wherein the upper connecting rod bearings (12) and the lower connecting rod bearings (13) are disposed on the ends of the carrier (5) and connected by eccentric levers (14), which are supported in each case in a bearing housing (15), via said bearing housings (15) to the roof (4) of the coach body (3).

7. Rail vehicle according to claim 6, wherein upon tilting of coach body (3) the carrier (5) is restorable counter to the tilting of the coach body (3) by means of a linkage (16), which is actuable by a drive (17), and wherein by means of the eccentric levers (14) the second tilting radius (r₂) is simultaneously increased in accordance with the tilting of the coach body (3).

8. Rail vehicle according to claim 7, wherein the drive (17) is disposed on the roof (4) of the coach body (3).

9. Rail vehicle according to claim 7, wherein the drive (17) is disposed in the bottom region of the coach body (3).

10. Rail vehicle according to claim 1, wherein the carrier (5) of the current collector (6) is connected directly to a drive (36).

11. Rail vehicle according to claim 1, wherein the carrier (5) of the current collector (6) is connected by a linkage to a drive (36).

12. Rail vehicle according to claim 10, wherein the carrier (5) of the current collector (6) is guided by connecting rods (30) and laterally guiding connecting rods (31).

13. Rail vehicle according to claim 12, wherein two connecting rods (30) are disposed on the wide end of the carrier (5) and one connecting rod (30) is disposed on the narrow end of the carrier (5).

14. Rail vehicle according to claim 12, wherein two connecting rods (30) are disposed on each end.

15. Rail vehicle according to claim 12, wherein the connecting rods (30) are connected by an upper connecting rod bearing (32) and by a lower connecting rod bearing (33) to the roof (4) of the coach body (3).

16. Rail vehicle according to claim 15, wherein the lower connecting rod bearings (33) and the upper connecting rod bearings (32) are disposed on the ends of the carrier (5) in each case in a bearing housing (34), which is rigidly connected to the roof (4) of the coach body (3).

17. Rail vehicle according to claim 1, wherein, in the absence of the drive (36), the carrier (5) of the current collector (6) is mechanically fixable to the centre of the vehicle by means of at least one stored-energy spring mechanism (37, 38) and a catch (39).

18. Rail vehicle according to claim 16, wherein the two bearing housings (34), which are fastened to the wide end of the carrier (5), are higher than the bearing housing (34), which is disposed on the narrow end of the carrier (5).

19. Rail vehicle according to claim 17, wherein the length of the connecting rods (30) is selected in such a way that the carrier (5) of the current collector (6) extends at a constant height above the roof (4) of the coach body (3).

20. Rail vehicle according to claim 1, wherein the carrier (5) is supported in plain or rolling-contact bearings (40) of a curved design.

21. Rail vehicle according to claim 1, wherein the carrier (5) of the current collector (6) is guided by two connecting rods (30), which are disposed on the wide end of the carrier (5), and is supported via a bearing (50, 60), which is disposed on the narrow end of the carrier (5).

22. Rail vehicle according to claim 21, wherein the bearing (50, 60) allows both a swivelling motion, which is caused by the connecting rods (30), and a tilting motion, which is caused by the connecting rods (30), of the carrier (5) towards the roof (4) of the coach body (3).

23. Rail vehicle according to claim 22, wherein the bearing (60) is designed so as to be movable in longitudinal axis of the coach body (3).

24. Rail vehicle according to claim 23, wherein the bearing takes the form of an elastic bearing.

25. Rail vehicle according to claim 24, wherein the bearing is of differing stiffnesses in x-axis and/or in y-axis and/or in z-axis.

26. Rail vehicle according to claim 21, wherein the connecting rods (30) are capable of swivelling in an upper connecting rod bearing (32) of a bearing housing (34) about a horizontal axis in longitudinal direction of the coach body (3).

27. Rail vehicle according to claim 21, wherein the carrier (5) of the current collector (6) is guided by a laterally guiding connecting rod (53), which is connected in the region of the wide end of the carrier (5) in an articulated manner to the carrier (5).

28. Rail vehicle according to claim 21, wherein disposed between the carrier (5) and the current collector (6) is an intermediate carrier (54), which is supported in a horizontally rotatable manner on the carrier (5).

29. Rail vehicle according to claim 28, wherein the intermediate carrier (54) is guided by a laterally guiding connecting rod (55), which is connected in an articulated manner to the wide end of the intermediate carrier (54).

30. Rail vehicle according to claim 28, wherein the intermediate carrier (54) is guided by an actuator.

31. Rail vehicle according to claim 28, wherein the intermediate carrier (54) is supported at its wide end by means of a rolling-contact bearing (56) and at its narrow end by means of an elastic bearing (57).

## Revendications

1. Véhicule sur rails, comportant les caractéristiques suivantes :
- au moins une caisse (3) inclinable de voiture, sur le toit (4) de laquelle un pantographe (6) peut être ramené à l'encontre de l'inclinaison de la caisse (3) de voiture,
- la caisse (3) de voiture pouvant être inclinée autour d'un premier pôle (1) d'inclinaison sur un premier rayon (r₁) d'inclinaison,
- et le pantographe (6) pouvant, par son support (5), être incliné autour d'un deuxième pôle (2) d'inclinaison sur un deuxième rayon (r₂) d'inclinaison,
**caractérisé en ce que**
- le deuxième rayon (r₂) d'inclinaison augmente avec l'augmentation de l'angle d'inclinaison de la caisse (3) de voiture.

2. Véhicule sur rails suivant la revendication 1, dans lequel le premier pôle (1) d'inclinaison et le deuxième pôle (2) d'inclinaison sont mutuellement distants.

3. Véhicule sur rails suivant la revendication 1 ou 2, dans lequel le deuxième pôle (2) d'inclinaison se déplace, lors de l'inclinaison de la caisse (3) de voiture, le long d'un axe (7) vertical disposé dans l'axe longitudinal de la caisse (3) de voiture.

4. Véhicule sur rails suivant la revendication 1, dans lequel le support (5) du pantographe (6) est guidé par des bielles (11) qui sont disposées sur les deux côtés longitudinaux du support (5).

5. Véhicule sur rails suivant la revendication 4, dans lequel les deux bielles (11) sont reliées au toit (4) de la caisse (3) de voiture par deux paliers (12) supérieurs de bielles et deux paliers (13) inférieurs de bielles respectifs.

6. Véhicule sur rails suivant la revendication 5, dans lequel les paliers (12) supérieurs de bielles et les paliers (13) inférieurs de bielles sont disposés sur les côtés frontaux du support (5) et sont reliés au toit (4) de la caisse (3) de voiture par l'intermédiaire de logements (15) de paliers et de leviers (14) d'excentrique qui sont chacun logés dans un logement (15) de palier.

7. Véhicule sur rails suivant la revendication 6, dans lequel le support (5) peut, lors d'une inclinaison de la caisse (3) de voiture, être ramené à l'encontre de l'inclinaison de la caisse (3) de voiture par l'intermédiaire d'une tringlerie (16) qui peut être actionnée par un entraînement (17), le levier (14) d'excentrique augmentant alors en même temps le deuxième rayon (r₂) d'inclinaison en fonction de l'inclinaison de la caisse (3) de voiture.

8. Véhicule sur rails suivant la revendication 7, dans lequel l'entraînement (17) est disposé sur le toit (4) de la caisse (3) de voiture.

9. Véhicule sur rails suivant la revendication 7, dans lequel l'entraînement (17) est disposé dans la région inférieure de la caisse (3) de voiture.

10. Véhicule sur rails suivant la revendication 1, dans lequel le support (5) du pantographe (6) est directement relié à un entraînement (36).

11. Véhicule sur rails suivant la revendication 1, dans lequel le support (5) du pantographe (6) est relié à un entraînement (36) par l'intermédiaire d'une tringlerie.

12. Véhicule sur rails suivant la revendication 10, dans lequel le support (5) du pantographe (6) est guidé au moyen de bielles (30) et de bielles (31) de guidage latéral.

13. Véhicule sur rails suivant la revendication 12, dans lequel deux bielles (30) sont disposées sur le côté frontal large du support (5), et une bielle (30) sur le côté frontal étroit du support (5).

14. Véhicule sur rails suivant la revendication 12, dans lequel deux bielles (30) sont disposées sur chaque côté frontal.

15. Véhicule sur rails suivant la revendication 12, dans lequel les bielles (30) sont reliées au toit (4) de la caisse (3) de voiture par l'intermédiaire d'un palier (32) supérieur de bielle et d'un palier (33) inférieur de bielle.

16. Véhicule sur rails suivant la revendication 15, dans lequel les paliers (33) inférieurs de bielles et les paliers (32) supérieurs de bielles sont disposés sur les côtés frontaux du pantographe (6), chacun dans un logement (34) de palier qui est rigidement relié au toit (4) de la caisse (3) de voiture.

17. Véhicule sur rails suivant la revendication 1, dans lequel le support (5) du pantographe (6), en cas de panne de l'entraînement (36), peut être immobilisé mécaniquement au milieu du véhicule par au moins un entraînement (37, 38) à ressort accumulateur et un cliquet (39).

18. Véhicule sur rails suivant la revendication 16, dans lequel les deux logements (34) de paliers qui sont fixés sur le côté frontal large du support (5) sont plus hauts que le logement (34) de palier qui est disposé sur le côté frontal étroit du support (5).

19. Véhicule sur rails suivant la revendication 17, dans lequel la longueur des bielles (30) est choisie de telle sorte que le support (5) du pantographe (6) s'étend à une hauteur constante au-dessus du toit (4) de la caisse (3) de voiture.

20. Véhicule sur rails suivant la revendication 1, dans lequel le support (5) est monté dans des paliers (40) lisses ou à roulements, réalisés incurvés.

21. Véhicule sur rails suivant la revendication 1, dans lequel le support (5) du pantographe (6) est guidé par deux bielles (30) qui sont disposées sur le côté frontal large du support (5) et est soutenu au moyen d'un palier (50, 60) qui est disposé sur le côté frontal étroit du support (5).

22. Véhicule sur rails suivant la revendication 21, dans lequel le palier (50, 60) permet à la fois un mouvement de pivotement, provoqué par les bielles (30), et un mouvement de basculement, provoqué par les bielles (30), du support (5) en direction du toit (4) de la caisse (3) de voiture.

23. Véhicule sur rails suivant la revendication 22, dans lequel le palier (60) est conçu mobile dans l'axe longitudinal de la caisse (3) de voiture.

24. Véhicule sur rails suivant la revendication 23, dans lequel le palier est réalisé sous forme de palier élastique.

25. Véhicule sur rails suivant la revendication 24, dans lequel le palier possède des rigidités différentes dans l'axe x et/ou dans l'axe y et/ou dans l'axe z.

26. Véhicule sur rails suivant la revendication 21, dans lequel les bielles (30) peuvent, dans un palier (32) supérieur de bielle d'un logement (34) de palier, être pivotées autour d'un axe horizontal dans la direction longitudinale de la caisse (3) de voiture.

27. Véhicule sur rails suivant la revendication 21, dans lequel le support (5) du pantographe (6) est guidé par une bielle (53) de guidage latéral qui est reliée en articulation au support (5) dans la région du côté frontal large du support (5).

28. Véhicule sur rails suivant la revendication 21, dans lequel un support (54) intermédiaire, qui est monté à rotation horizontale sur le support (5), est disposé entre le support (5) et le pantographe (6).

29. Véhicule sur rails suivant la revendication 28, dans lequel le support (54) intermédiaire est guidé par une bielle (55) de guidage latéral qui est reliée en articulation au côté frontal large du support (54) intermédiaire.

30. Véhicule sur rails suivant la revendication 28, dans lequel le support (54) intermédiaire est guidé par un vérin.

31. Véhicule sur rails suivant la revendication 28, dans lequel le support (54) intermédiaire est monté sur son côté frontal large au moyen d'un palier (56) à roulement et sur son côté frontal étroit au moyen d'un palier (57) élastique.
